# EUROPEAN PATENT APPLICATION

(11) **EP 0 785 062 A2**
(43) Date of publication of application: **23.07.1997**
(21) Application number: 96309127.7
(22) Date of filing: 13.12.1996
(51) Int. Cl.: B29C 70/48, B29C 70/54, B29C 31/04, B29D 22/00

(54) **Apparatuses and methods of moulding plastics**

(30) Priority: 16.01.1996 US 586078
(71) Applicant: Hudson Products Corporation, Houston, Texas 77036-3321 (US)
(72) Inventor: Monroe, Robert C., Houston, Texas 77035 (US)
(74) Representative: Pilch, Adam John Michael

(57) **Abstract**

A technique for moulding items, in particular hollow items, using resin transfer moulding, in such a manner that the resin (24) is more uniformly distributed about and along the moulding region (16) of the mould (12,14). This is accomplished by installing oppositely spaced groove (22) in the mould (12,14) and injecting resin (24) directly into these grooves (22). Upon such injection, the resin (24) travels along and fills the groove (22), by taking the path of least resistance, before such resin (24) is squeezed or forced out of a minute gap (50) between the moulding surfaces and into the moulding region (16) of the mould (12,14). As such resin (24) is being forcibly injected into the cloths (20) in the mould, a vent (42) permits any air displaced from the cloths (20) by the resin (24) to be released. Such resin injection and mould venting occurs until such time that no more air is vented and instead 100% resin (24) is being discharged from the mould (12,14). Upon this occurrence, further resin injection is curtailed and the resin (24) previously injected is allowed to harden and cure. A disposable pressure bag (18) distributes the moulding pressure created by the injected resin equally within the mould. Thus this pressure bag (18) enables a high quality void-free plastics laminate to be made.

## Description

This invention relates to moulding systems and methods, such as those suitable for moulding hollow articles, for example fan blades, using the resin transfer moulding technique.

One common method of manufacturing articles such as hollow fan blades is the resin transfer method. This method forcibly injects resin into a mould that generally contains numerous cloth strips surrounding an inflated bag. It is intended for the injected resin to saturate these cloth strips before it hardens or cures. Afterwards, the bag is removed through an opening (such as through the neck of one-piece fan blades) and the blade removed from the mould for subsequent cleaning and inspection.

A problem associated with the resin injection method concerns air that may become trapped within the mould. If this air is not completely vented upon the injection of the resin (as the resin replaces the air within the cloth within the mould), the blade will be cured with air bubbles therein which can significantly reduce the strength of the blade. The result of air bubbles trapped within the cloth layers is the formation of "dry" areas of cloth which are not "wetted out" with the proper amount of resin.

According to an aspect of the invention there is provided a moulding system comprising:
a first mould and a separable matching second mould, said first and second moulds defining a recessed moulding region therebetween;
a resin groove in at least said first mould extending alongside but spaced from said moulding region;
a gap intermediate said first and second moulds when said moulds are secured together, said gap forming a passageway between said resin groove and said moulding region;
resin injection means coupled to said resin groove for forcibly injecting resin into said groove, said resin traveling along said groove and being subsequently forced out of said groove, through said gap, and into said moulding region of said first and second moulds;
vent means coupled to said moulding region for venting said moulding region, said vent means being spaced from said resin groove; and
seal means for sealing or enclosing said moulding region and said resin groove.

According to another aspect of the invention there is provided a method of moulding comprising the steps of:
constructing and arranging a first mould and a separable matching second mould, said first and second moulds defining a recessed moulding region therebetween;
installing a resin groove in at least said first mould, said resin groove extending alongside but spaced from said moulding region;
forming a gap intermediate said first and second moulds when said moulds are secured together, said gap extending between said resin groove and said moulding region;
coupling a resin injection assembly to said resin groove for forcibly injecting resin into said groove, said resin travelling along said groove and being subsequently forced out of said groove, through said gap, and into said moulding region of said first and second moulds;
coupling a vent assembly to said moulding region for venting said moulding region, said vent assembly being spaced from said resin groove; and
sealing or enclosing said moulding region and said resin groove via a seal assembly.

A preferred embodiment of this invention provides a method and apparatus that more evenly and uniformly distribute resin throughout the mould. An internal pressure bag can be inflated while still enabling resin to be transferred over the pressure port. A variety of differently shaped hollow fan blades (or other objects) of superior quality can be moulded by this technique. The preferred embodiment provides a means of displacing air entrapped within the cloth layers and allowing resin to fill the void and saturate the cloth layers properly. The productivity of moulding fan blades or similar can be improved, since the rejection rate will be reduced. The preferred technique allows more aerodynamically shaped blades to be moulded.

The invention will now be described by way of example with reference to the accompanying drawings, throughout which like parts are referred to by like references, and in which:
Figure 1 is a top part-sectional view of one embodiment of the invention with the upper mould removed for clarity;
Figure 2 is a sectional view of the neck region taken along lines 2-2 of Figure 1;
Figure 3 is a sectional view of the neck region taken along lines 3-3 of Figure 1;
Figure 4 is a sectional view of the neck region taken along lines 4-4 of Figure 1;
Figure 5 is a sectional view of the resin injection region taken along lines 5-5 of Figure 1; and
Figure 6 is a sectional view of the vent region taken along lines 6-6 of Figure 1.

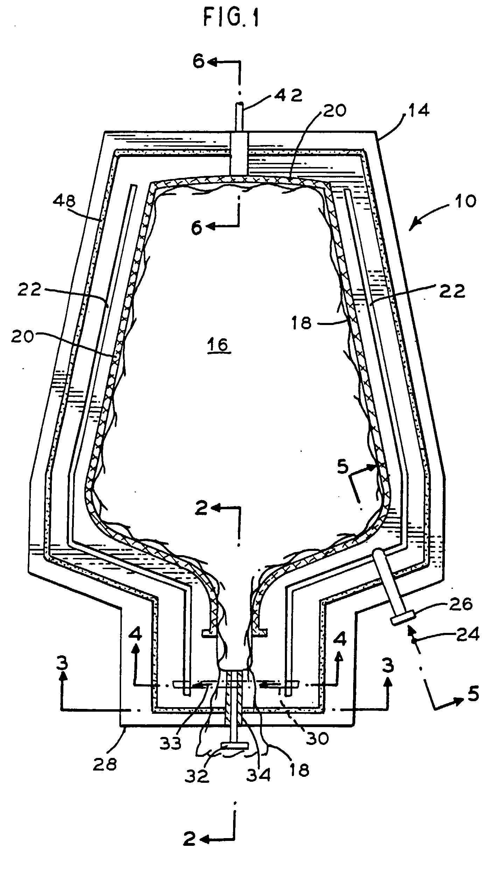

Referring initially to Figure 1, there is shown a top plan part-sectional view of a moulding system 10 according to a preferred embodiment of this invention. This moulding system 10 comprises an upper mould 12 (not shown in Figure 1 for clarity) and a matching lower mould 14, both of which are configured with matching concave moulding regions 16 therein. An inflatable pressure bag 18 is typically placed within this recessed moulding region 16 with the bag 18 usually being covered by numerous cloth strips 20 in the normal manner. Generally, these cloth strips 20 would be made of glass fibres, but other types of cloth strips 20 may also be suitable.

Extending along opposite sides of the recessed moulding region 16 are resin grooves 22 which, in this embodiment, are shown as being created in the lower mould 14. However, the resin grooves 22 can also be located in the upper mould 12 or in both such moulds 12 and 14 if so desired. These resin grooves 22 typically surround most, if not all, of the moulding region 16. The resin grooves 22 may be of any size or shape as long as injected resin 24 can freely travel therealong. Such resin 24 is injected into one resin groove 22, as shown, via an injection port 26, but if desired, a duplicate injection port 26 can be installed with respect to the opposite resin groove 22. Thus, resin 24 is not injected directly into the moulding region 16 as would typically be the case; instead, resin 24 is injected into the grooves 22 through which it travels before being forced into the cloth strips 20 in the moulding region 16 through a minute gap 50 that exists between the upper and lower moulds 12 and 14.

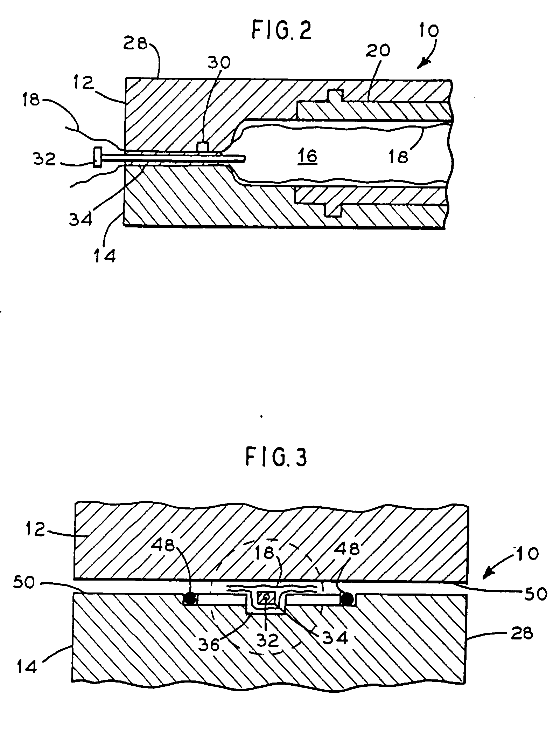

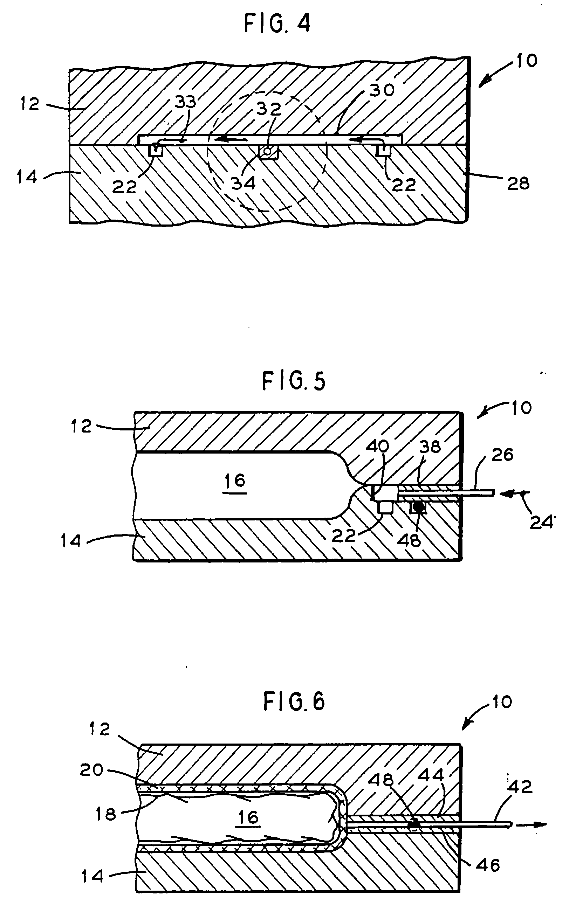

Located at a neck region 28 of the moulding system 10 is a resin crossover groove 30 which is used to inter-connect the oppositely spaced resin grooves 22. As indicated in Figures 2 and 4, this crossover groove 30 is created in the upper mould 12, but it could also be in the lower mould 14 with a simple design change in the moulding system 10. Basically, the crossover groove 30 provides a means for the oppositely spaced resin grooves 22 to be interconnected and cross over an air inlet 32. This is shown by arrows 33 in Figures 1 and 4.

Referring now to Figures 1 to 3, the air inlet 32 in the neck region 28 provides direct access to the interior of the pressure bag 18 thereby allowing this bag 18 to become pressurized upon coupling the air inlet 32 to a pressure source (not shown). This air inlet 32 is surrounded by an elastic seal strip 34 that fits within a groove 36 in the neck region 28. The elastic seal strip 34 extends slightly above the groove 36 such that when the upper and lower moulds 12 and 14 are sealed together, the seal strip 34 is compressed thereby sealing against the groove 36 which will consequently prevent any resin 24 from leaking into the bag 18 or out of the neck region 28 along the groove 36. Additional sealing is accomplished by a transverse O-ring seal 48 which butts against the seal strip 34.

Figure 5 shows a sectional view of the injection port 26. This port 26 may also incorporate an elastomer seal 38 that fits into a groove 40. However, the groove 40, as indicated, does not extend all the way to the moulding region 16; instead, the groove 40 stops short of this region 16 and terminates instead at or just past the resin groove 22 as shown. Also, the elastomer seal 38 extends slightly above the groove 40 such that as the upper and lower moulds 12 and 14 are sealed together, the elastomer seal 38 is compressed thereby sealing against the groove 40 which prevents any resin 24 from leaking out of the moulding system 10 via the groove 40. Instead, all the injected resin 24 is forced into the resin grooves 22.

Referring now to Figure 6, there is shown a vent 42 which may typically be located at the tip of the moulded blade (or other object) as shown in Figure 1. In other words, the vent 42 is located some distance away from the resin grooves 22 so that the vent 42 will be the last area reached by the injected resin 24. Consequently, by the time the resin 24 reaches the vent 42 (this resin 24 saturating the cloth strips 20 and displacing the air therein), the entire area of the moulding region 16 exterior of the pressure bag 18 will have been filled by such resin 24. Thus, once the vent 42 begins to bleed or vent 100% resin 24, no further resin 24 need be injected into the moulding system 10 since all of the moulding region 16 outside of the pressure bag 18 will now be filled with such resin 24. When this occurs, all of the cloth strips 20 will also have been saturated by the resin 24.

However, before 100% resin 24 begins to escape via the vent 42, this vent 42 first provides a means for air to leave the moulding region 16 as such air becomes displaced by the injected resin 24. Again, the vent 42 incorporates a pressure seal 44 placed within the groove 46 which may be created in either or both of the upper and lower moulds 12 and/or 14. This seal 44 will be compressed in the typical manner upon the sealing of these moulds 12 and 14 together. Such compression will cause the pressure seal 44 to seal against the groove 46. Also, as shown in Figure 6, the vent 42 extends all the way to the moulding region 16 so that any air between the pressure bag 18 and the moulds 12 and 14 can escape via such vent 42.

The system also includes an O-ring seal 48 that extends just inside the outer periphery of the lower mould 12 in order to encircle or enclose both the resin groove 22 and the moulding region 16. Again, the O-ring seal 48 can be of any configuration and can be constructed to extend along the upper mould 14 as well or instead. The O-ring seal 48 is sized to extend slightly above its respective groove in the typical manner so that when the upper and lower moulds 12 and 14 are closed, a seal will be formed. However, a slight or minute gap 50 will still exist between these upper and lower moulds 12 and 14 in the vicinity of the resin groove 22 with the gap 50 being in the order of a few hundredths of a millimetre (a few thousandths of an inch) or so thick. It is through this gap 50 that the resin 24 is squeezed or travels as it passes from the grooves 22 and 30 into the moulding region 16.

Since the resin 24 will be forcibly injected into the moulding system 10, this same energy will be the driving force causing the resin 24 to squeeze through the gap 50 towards the moulding region 16 along the length of the grooves 22 and 30. However, the O-ring seal 48 will prevent any such resin 24 from leaking out of the moulding system 10; instead, the O-ring seal 48 will contain this pressurized resin within its boundaries. As a result of this method of construction, after the resin 24 has cured and the moulding system 10 is opened, a thin extension of cured resin 24 will need to be chipped or otherwise removed from around the perimeter of the now-moulded blade or other object.

It should be noted that the O-ring seal 48 is not continuous along the perimeter of the moulding system 10. Instead, as shown in Figure 3, a small gap in the O-ring seal 48 will exist at the neck region 38 which will be just wide enough for the elastic seal strip 34 to fit therebetween. Thus, as this elastic seal strip 34 is compressed, it will not only seal against its respective groove 36, but also against the O-ring seal 48 so as to prevent any escape of the resin 24. Likewise, as shown in Figure 6, a similar gap in the O-ring seal 48 will exist at the vent 42 which will be just large enough for the pressure seal 44. Thus, upon the closing of the moulding system, the pressure seal 44 will be forced to form a seal with the O-ring seal 48. In this fashion, while the O-ring seal 48 is, in reality, not continuous, it acts as if it were one continuous O-ring. As shown in Figure 5, the O-ring seal 48 passes underneath the injection port 26 and its associated groove 40. In this fashion the O-ring seal 48 and the elastomer seal 38 will be in contact with each other to prevent the escape of any resin 24 from the moulding system 10.

Thus, for operation, the moulding system 10 is opened so that the pressure bag 18 and the cloth strips 20 can be placed within the moulding area 16. The end of the bag 18 generally extends outside the moulding system 10 as shown so that the air inlet 32 can be placed in position to pressurize the bag 18. The closing of the upper and lower moulds 12 and 14 effectively seals the moulding region 16 with the O-ring seal 48 preventing any leakage or escape from within the system 10. The resin 24 is then forcibly injected into the resin grooves 22 with any displaced air being vented via the vent 42. This resin 24 will take the path of least resistance and subsequently will travel along and fill the grooves 22 and the crossover groove 30 until such time that it is forced to travel or squeeze through the small gap 50 on its way to the moulding area 16. Once the resin 24 begins to enter the moulding area 16, it will saturate the cloth strips 20 and fill the area between the pressure bag 18 and the upper and lower moulds 12 and 14. In doing so, any air within the grooves 22 or 30 and any air within the region between the bag 18 and the moulds 12 and 14 will be forced out through the vent 42 until such time that no more air is vented and instead 100% resin now escapes via the vent 42. At this time, further resin injection will be curtailed with the resin 24 within the moulding system 10 being allowed to cure. Afterwards, the moulding system 10 is opened and the moulded object (such as an air foil) may be removed.

While the above described moulding system 10 is designed primarily for use in creating many different hollow airfoils or fan blade designs, the features of this system 10 can easily be modified so that other devices can likewise be created with this process, utilizing similar structure. For example, by omitting the pressure bag 18, solid devices can easily be formed.

## Claims

1. A moulding system comprising:
a first mould (14) and a separable matching second mould (12), said first and second moulds (14,12) defining a recessed moulding region (16) therebetween;
a resin groove (22) in at least said first mould (14) extending alongside but spaced from said moulding region (16);
a gap (50) intermediate said first and second moulds (14,12) when said moulds are secured together, said gap (50) forming a passageway between said resin groove (22) and said moulding region (16);
resin injection means (26) coupled to said resin groove (22) for forcibly injecting resin (24) into said groove (22), said resin (24) travelling along said groove (22) and being subsequently forced out of said groove (22), through said gap (50), and into said moulding region (16) of said first and second moulds (14,12);
vent means (42) coupled to said moulding region (16) for venting said moulding region (16), said vent means (42) being spaced from said resin groove (22); and
seal means (48) for sealing or enclosing said moulding region (16) and said resin groove (22).

2. A moulding system according to claim 1, wherein the moulding system (10) is generally elongate and wherein said resin groove (22) extends along opposite longitudinal sides of said moulding region (16).

3. A moulding system according to claim 2, wherein said vent means (42) is located at a first longitudinal end of the moulding system (10).

4. A moulding system according to claim 2 or claim 3, comprising a resin crossover groove (30) adjacent a second longitudinal end of the moulding system (10), said resin crossover groove (30) interconnecting the opposite resin grooves (22).

5. A moulding system according to claim 2, claim 3 or claim 4, comprising an inflatable bag (18) insertable within said moulding region (16), said inflatable bag (18) being coupled to an air inlet (32) for the pressurization of said bag (18) within said moulding region (16).

6. A moulding system according to claim 5, wherein said air inlet (32) is located at the second longitudinal end of the moulding system (10).

7. A moulding system according to claim 4 or claim 6, wherein said resin crossover groove (30) is in said second mould (12).

8. A moulding system according to any one of the preceding claims, wherein said moulding region (16) is in the shape of an air foil.

9. A method of moulding comprising the steps of:
constructing and arranging a first mould (14) and a separable matching second mould (12), said first and second moulds (14,12) defining a recessed moulding region (16) therebetween;
installing a resin groove (22) in at least said first mould (14), said resin groove (22) extending alongside but spaced from said moulding region (16);
forming a gap (50) intermediate said first and second moulds (14,12) when said moulds are secured together, said gap (50) extending between said resin groove (22) and said moulding region (16);
coupling a resin injection assembly (26) to said resin groove (22) for forcibly injecting resin (24) into said groove (22), said resin (24) travelling along said groove (22) and being subsequently forced out of said groove (22), through said gap (50), and into said moulding region (16) of said first and second moulds (14,12);
coupling a vent assembly (42) to said moulding region (16) for venting said moulding region (16), said vent assembly (42) being spaced from said resin groove (22); and
sealing or enclosing said moulding region (16) and said resin groove (22) via a seal assembly (48).

10. A method according to claim 9, comprising the step of constructing said first mould as a generally elongate mould (14) and wherein said resin groove (22) extends along opposite longitudinal sides of said moulding region (16).

11. A method according to claim 10, comprising the step of locating said vent assembly (42) adjacent a first longitudinal end of said first mould (14).

12. A method according to claim 10 or claim 11, comprising the step of installing a resin crossover groove (30) adjacent a second longitudinal end of said first mould (14), said resin crossover groove (30) interconnecting the opposite resin grooves (22).

13. A method according to claim 10, claim 11 or claim 12, comprising the step of inserting an inflatable bag (18) within said moulding region (16), said inflatable bag (18) being coupled to an air inlet (32) for the pressurization of said bag (18) within said moulding region (16).

14. A method according to claim 13, comprising the step of locating said air inlet (32) at or adjacent the second longitudinal end of said first mould (14).

15. A method according to claim 12 or claim 14, comprising the step of constructing said resin crossover groove (30) in said second mould (12).

16. A method according to any one of claims 9 to 15, comprising the step of constructing and arranging said moulding region (16) in the shape of an air foil.
